# EUROPÄISCHE PATENTSCHRIFT

(11) **EP 2 861 951 B1**
(45) Veröffentlichungstag und Bekanntmachung des Hinweises auf die Patenterteilung: **26.12.2018**
(21) Anmeldenummer: 13728208.3
(22) Anmeldetag: 13.06.2013
(51) Int. Cl.: G01M 3/02, G01M 3/00

(54) **PRÜFVORRICHTUNG MIT EINEM PRÜFGASBEHÄLTER**
TESTING DEVICE HAVING A TEST GAS CONTAINER
DISPOSITIF DE CONTRÔLE COMPORTANT UN RÉCIPIENT DE GAZ DE CONTRÔLE

(30) Priorität: 14.06.2012 DE 102012210040
(43) Veröffentlichungstag der Anmeldung: 22.04.2015
(73) Patentinhaber: Inficon GmbH, 50968 Köln (DE)
(72) Erfinder: DECKER, Silvio, 50999 Köln (DE); GERDAU, Ludolf, 50189 Elsdorf (DE)
(74) Vertreter: dompatent von Kreisler Selting Werner - Partnerschaft von Patent- und Rechtsanwälten mbB
(86) Internationale Anmeldenummer: PCT/EP2013/062226
(87) Internationale Veröffentlichungsnummer: WO 2013/186295

(56) Entgegenhaltungen:
- EP-A1- 2 447 694
- WO-A1-02/095348
- DE-A1-102009 012 213
- JP-A- H04 194 719
- US-A- 5 242 111

## Beschreibung

Die Erfindung betrifft eine Prüfvorrichtung mit einem Prüfgasbehälter und einem Prüfleck.

Zur Dichtheitsprüfung von zu prüfenden Hohlkörpern, wie beispielsweise Lebensmittelverpackungen, werden Leckprüfanlagen eingesetzt, die den zu prüfenden Hohlkörper über einen vorgegebenen Zeitraum einer definierten Druckdifferenz bzw. einem definierten Druck aussetzen. Die Veränderung des äußeren Drucks über den Zeitraum dient als Hinweis auf ein bestehendes Leck in dem Hohlkörper. Die Leckprüfanlagen müssen in regelmäßigen Abständen auf ihre Funktionsfähigkeit geprüft werden. Hierzu werden Prüfvorrichtungen eingesetzt, die den undichten Hohlkörper simulieren, indem sie einen Prüfgasbehälter aufweisen, der mit einem Prüfleck zur Erzeugung eines Prüfgasstroms mit einer vorgegebenen Leckrate versehen ist. Das Prüfleck besteht dabei aus mindestens einer Kapillare, die den Innenraum des Prüfgasbehälters mit dessen äußerer Umgebung gasleitend verbindet.

Der Prüfgasbehälter dient als Quelle für das Prüfgas, das der Leckprüfvorrichtung über das Prüfleck zugeführt wird. Herkömmliche Prüfgasbehälter sind typischerweise starr, zum Beispiel aus Metall, ausgebildet. Es existieren Prüfgasbehälter mit Permeationslecks oder mit Kapillarlecks, die jeweils eine definierte Leckrate aufweisen. Die Leckrate wird durch die Leckrate der Kapillare bzw. Membran und durch die Druckdifferenz zwischen dem Prüfgasbehälter und der Umgebung definiert.

Für Leckprüfanlagen, die beispielsweise Verpackungen auf Dichtheit prüfen, werden Prüfvorrichtungen benötigt, die regelmäßig in wiederkehrenden Abständen eingesetzt werden und Prüflecks mit einer relativ großen Leckrate bereitstellen. Bei starren Prüfgasbehältern besteht eine Schwierigkeit darin, dass eine große Leckrate zu einem großen Druckabfall innerhalb des Prüfgasbehälters führt und der Prüfgasbehälter häufig neu zu befüllen ist, um zu verhindern, dass die Leckrate der Prüfvorrichtung zu schnell abfällt. Das Volumen der bekannten Prüfgasbehälter ist vergleichsweise klein, da die Prüfvorrichtung nicht viel größer sein darf, als die zu prüfenden Teile. Dadurch ist es nicht möglich, das Volumen des Prüfgasbehälters beliebig zu vergrößern, um den Druckabfall in dem Prüfgasbehälter zu verringern.

Herkömmlicherweise wird dem Problem des Druckabfalls durch Verwenden von Druckmindereren in Verbindung mit einem Gas-Reservoir begegnet, um einen konstanten Druck im Bereich der Kapillare oder Membran zu erzeugen. Eine solche Lösung ist jedoch mit hohen Kosten verbunden und bei einem geringen Volumen schwer zu realisieren.

Verschiedene Prüfgasbehälter sind aus den Dokumenten EP 2 447 694, DE 10 2009 012 213, US 5 242 111 und JP04 194 719 bekannt.

Der Erfindung liegt die Aufgabe zugrunde, eine verbesserte Prüfvorrichtung zur Erzeugung eines Prüfgasstroms mit vorgegebener Leckrate zu schaffen.

Die erfindungsgemäße Prüfvorrichtung wird definiert durch die Merkmale von Patentanspruch 1.

Demnach ist der Prüfgasbehälter zumindest zu einem Teil aus einem flexiblen Material gebildet. Bei dem flexiblen Material kann es sich um eine Folie handeln. Vorzugsweise ist der Prüfgasbehälter ein vollständig aus dem flexiblen Material gefertigter Beutel, d. h. ein Folienbeutel. Ein solcher Folienbeutel kann auf einfache Weise bereitgestellt werden, indem zwei Folien in deren Randbereichen, d. h. entlang deren äußerer Ränder, aufeinander gelegt und dort miteinander gasdicht verbunden werden. Die gasdichte Verbindung kann durch Schweißen oder Kleben geschaffen werden. In den Randbereich kann die Kapillare eingebettet, also mit eingeschweißt oder eingeklebt sein, so dass das eine Ende der Kapillare mit dem Innenraum des Prüfgasbehälters und das gegenüberliegende Ende mit der äußeren Umgebung verbunden ist.

Im Innenraum enthält der Prüfgasbehälter einen Abstandshalter, der dazu ausgebildet ist, zumindest einen Teil des flexiblen Materials von zumindest einem Teil der übrigen Wände des Prüfgasbehälters in einem Abstand zu halten. Der Abstandshalter kann so vermeiden, dass das flexible Material an den Innenwänden des Prüfgasbehälters festklebt. Zudem wird die Befüllung des Prüfgasbehälters erleichtert. Im Falle eines Folienbeutels kann es sich bei dem Abstandshalter um ein Vlies, ein Tuch oder um ein anderes, flexibles weiches Material handeln, welches zwischen die beiden Folien eingebracht ist und zwischen diesen als Abstandshalter wirkt. Beim Befüllen des Folienbeutels erleichtert der Abstandshalter das Einströmen des Gases zwischen die beiden Folien, ohne dass diese aneinander kleben.

Die Länge und der Innendurchmesser der Kapillare sind derart gewählt, dass bei den verwendeten Drücken innerhalb des Prüfgasbehälters eine Leckrate Q der Kapillare von mehr als 10⁻³ mbar · l/s (Millibar mal Liter pro Sekunde) resultiert. Hierbei hat der Prüfgasbehälter ein Innenvolumen zwischen 100 und 500 cm³ und vorzugsweise zwischen 150 und 250 cm³. Von besonderem Vorteil ist ein Innenvolumen des Prüfgasbehälters von etwa 200 cm³.

Im Folgenden wird anhand der Figuren ein Ausführungsbeispiel der Erfindung näher erläutert. Es zeigen:

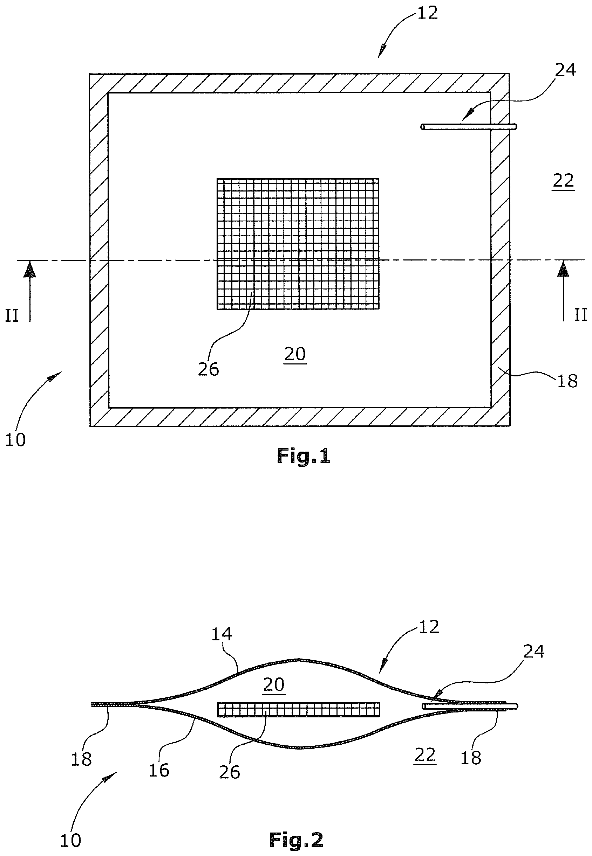

- Fig. 1: einen Längsschnitt durch die Prüfvorrichtung und
- Fig. 2: den Querschnitt durch die Prüfvorrichtung gemäß der Linie II-II in Fig. 1.

Die Prüfvorrichtung 10 des Ausführungsbeispiels weist einen Prüfgasbehälter 12 in Form eines Folienbeutels auf. Der Prüfgasbehälter 12 ist aus zwei aufeinander gelegten, ebenen Folien 14, 16 gebildet, die in deren äußerem Randbereich 18 miteinander verschweißt sind. Der Prüfgasbehälter 12 umgibt dadurch einen Innenraum 20, der durch die Folien von der äußeren Umgebung 22 des Prüfgasbehälters abgetrennt ist.

In den Randbereich 18 ist das Prüfleck 24 in Form einer Kapillare eingebracht, die den Innenraum 20 mit der äußeren Umgebung 22 gasleitend verbindet. Die Gasleitung erfolgt hierbei ausschließlich von dem Innenraum 20 in die äußere Umgebung 22 durch die Kapillare hindurch. Die Kapillare weist eine im Verhältnis zu deren Innendurchmesser große Länge auf.

In den Innenraum 20 ist zwischen die beiden Folien 14, 16 ein Abstandshalter 26 in Form eines flexiblen, weichen Tuchs eingebracht. Der Abstandshalter 26 verhindert, dass die beiden Folien 14, 16 im entleerten Zustand des Prüfgasbehälters 12 aneinander kleben. Ein Befüllen eines leeren Prüfgasbehälters 12 ist dadurch erleichtert.

Beim Befüllen des Prüfgasbehälters 12 wird zunächst eine der beiden Folien 14, 16 angestochen und durch das so hergestellte Loch mit dem Prüfgas befüllt. Nach Befüllen wird das entstandene Loch mit einem Klebefilm oder einem Klebstoff verschlossen. Alternativ ist auch denkbar, dass eine der beiden Folien mit einer verschließbaren Öffnung versehen ist.

Der Innendruck eines solchen Prüfgasbehälters in Form eines Folienbeutels entspricht weitgehend dem äußeren atmosphärischen Luftdruck. Wenn die Gasmenge in dem Prüfgasbehälter 12 abnimmt, passt sich das Volumen des Behälters entsprechend an. Dadurch ist die Leckrate der Prüfvorrichtung 10 über einen vergleichsweise langen Zeitraum relativ konstant. Bei einem Prüfgasbehälter 12 mit einem Innenvolumen von 200 cm³ und einer Leckrate von 10⁻³ mbar · l/s können bei einer Dauer von 10 Sekunden pro durchzuführender Kalibrierung 20.000 einzelne Kalibriervorgänge durchgeführt werden.

## Patentansprüche

1. Prüfvorrichtung (10) mit einem Prüfgasbehälter (12), der mit einem Prüfleck (24) zur Erzeugung eines Prüfgasstroms mit vorgegebener Leckrate versehen ist, wobei das Prüfleck (24) aus mindestens einer Kapillare besteht, die den Innenraum (20) des Prüfgasbehälters (12) mit dessen äußerer Umgebung (22) gasleitend verbindet, und der Prüfgasbehälter (12) zumindest zu einem Teil aus einem flexiblen Material besteht,
**dadurch gekennzeichnet,**
**dass** der Prüfgasbehälter (12) im Innenraum (20) einen Abstandshalter (26) zum Beabstanden eines Teils des flexiblen Materials von zumindest einem Teil der übrigen Wände des Prüfgasbehälters (12) enthält.

2. Prüfvorrichtung (10) nach Anspruch 1, **dadurch gekennzeichnet, dass** der Prüfgasbehälter (12) ein vollständig aus einem flexiblen Material gefertigter Beutel ist.

3. Prüfvorrichtung (10) nach Anspruch 2, **dadurch gekennzeichnet, dass** der Beutel aus zwei in deren Randbereich (18) gasdicht miteinander verbundenen Folien (14, 16) gebildet ist, wobei die Kapillare in den Randbereich (18) der Folien (14, 16) eingebettet ist.

4. Prüfvorrichtung (10) nach einem der vorhergehenden Ansprüche, **dadurch gekennzeichnet, dass** der Abstandshalter (26) aus einem flexiblen, weichen Material, beispielsweise aus einem Vlies oder einem Tuch besteht.

5. Prüfvorrichtung (10) nach einem der vorhergehenden Ansprüche, **dadurch gekennzeichnet, dass** Länge und Innendurchmesser der Kapillare derart gewählt sind, dass die resultierende Leckrate q der Kapillare größer als oder gleich 10⁻³ mbar · l/s.

6. Prüfvorrichtung (10) nach einem der vorhergehenden Ansprüche, **dadurch gekennzeichnet, dass** das Innenvolumen des Prüfgasbehälters (12) zwischen 100 und 500 cm³, vorzugsweise zwischen 150 und 250 cm³ und insbesondere etwa 200 cm³ beträgt.

## Claims

1. A testing device (10), comprising a test gas container (12), which is provided with a test leak (24) for producing a test gas flow with a predefined leakage rate, wherein the test leak (24) comprises at least one capillary tube which connects the interior (20) of the test gas container (12) to the ambient environment (22) of the test gas container in a gas-conducting manner, and the test gas container (12) is at least partially made of a flexible material,
**characterized in that**
the test gas container (12) includes a spacer (26) in its interior (20), the spacer serving to space a part of the flexible material apart from at least a part of the other walls of the test gas container (12).

2. The testing device (10) of claim 1, **characterized in that** the test gas container (12) is a bag entirely made of a flexible material.

3. The testing device (10) of claim 2, **characterized in that** the bag is formed by two films (14, 16) joined in a gas-tight manner at their edge portions (18), the capillary tube being embedded in the edge portion (18) of the films (14, 16).

4. The testing device (10) of one of the preceding claims, **characterized in that** the spacer (26) is formed by a flexible soft material, for example a nonwoven or a cloth.

5. The testing device (10) of one of the preceding claims, **characterized in that** the length and the inner diameter of the capillary tube are selected such that the resulting leakage rate q of the capillary tube is greater or equal to 10⁻³ mbar • l/s.

6. The testing device (10) of one of the preceding claims, **characterized in that** the inner volume of the test gas container (12) is between 100 and 500 cm³, preferably between 150 and 250 cm³, and in particular about 200 cm³.

## Revendications

1. Dispositif de test (10) comprenant un récipient de gaz de test (12) muni d'une fuite de test (24) destinée à générer un flux de gaz de test à un débit de fuite prédéterminé, la fuite de test (24) comprenant au moins un capillaire qui relie de manière gazeuse l'espace intérieur (20) du récipient de gaz de test (12) à son environnement extérieur (22), et le récipient de gaz de test (12) comporte au moins en partie une matière flexible,
**caractérisé en ce que**
le récipient de gaz de test (12) contient dans l'espace intérieur (20) un élément d'espacement (26) destiné à espacer une partie de la matière flexible d'au moins une partie des parois restantes du récipient de gaz de test (12) .

2. Dispositif de test (10) selon la revendication 1, **caractérisé en ce que** le récipient de gaz de test (12) est un sac entièrement en matière souple.

3. Dispositif de test (10) selon la revendication 2, **caractérisé en ce que** le sac est formé de deux films (14, 16) étanches au gaz et reliés entre eux dans la zone de bord (18), le capillaire étant intégré dans la zone de bord (18) des films (14, 16).

4. Dispositif de test (10) selon l'une quelconque des revendications précédentes, **caractérisé en ce que** l'élément d'espacement (26) est en une matière souple flexible, par exemple en non-tissé ou en tissu.

5. Dispositif de test (10) selon l'une des revendications précédentes, **caractérisé en ce que** la longueur et le diamètre intérieur du capillaire sont choisis de manière à ce que le débit de fuite résultant q du capillaire soit supérieur ou égal à 10⁻³ mbar·l/s.

6. Dispositif de test (10) selon l'une des revendications précédentes, **caractérisé en ce que** le volume intérieur du récipient de gaz de test (12) est compris entre 100 et 500 cm³, de préférence entre 150 et 250 cm³ et en particulier est d'environ 200 cm³.
